Europäisches Patentamt

European Patent Office

Office européen des brevets

(19)

(11) **EP 1 287 174 B1**

(12) **FASCICULE DE BREVET EUROPEEN**

(45) Date de publication et mention
de la délivrance du brevet:
**01.06.2005 Bulletin 2005/22**

(21) Numéro de dépôt: **01938312.4**

(22) Date de dépôt: **23.05.2001**

(51) Int Cl.$^7$: **C22C 19/07**, C03B 37/095,
C03B 37/04, C22F 1/10

(86) Numéro de dépôt international:
**PCT/FR2001/001590**

(87) Numéro de publication internationale:
**WO 2001/090429 (29.11.2001 Gazette 2001/48)**

(54) **PROCEDE DE FABRICATION DE LAINE MINERALE, ALLIAGES A BASE DE COBALT POUR LE PROCEDE ET AUTRES UTILISATIONS**

VERFAHREN ZUR HERSTELLUNG VON MINERALWOLLE, KOBALT-BASISLEGIERUNGEN FÜR DAS VERFAHREN UND ANDERE ANWENDUNGEN

METHOD FOR MAKING MINERAL WOOL, COBALT-BASED ALLOYS THEREFOR AND OTHER USES

(84) Etats contractants désignés:
**AT BE CH CY DE DK ES FI FR GB GR IE IT LI LU
MC NL PT SE TR**

(30) Priorité: **23.05.2000 FR 0006583**

(43) Date de publication de la demande:
**05.03.2003 Bulletin 2003/10**

(73) Titulaires:
• **SAINT-GOBAIN ISOVER**
**92400 Courbevoie (FR)**
• **Saint-Gobain Seva**
**71100 Chalon sur Saone (FR)**

(72) Inventeurs:
• **BERTHOD, Patrice**
**F-54700 Pont-à-Mousson (FR)**

• **BERNARD, Jean-Luc**
**60600 Clermont (FR)**
• **LIEBAUT, Christophe**
**F-71640 Mercurey (FR)**

(74) Mandataire: **Cardin, Elise et al**
**Saint-Gobain Recherche**
**39, quai Lucien Lefranc**
**93300 Aubervilliers Cedex (FR)**

(56) Documents cités:
**WO-A-99/16919          WO-A-99/56525
US-A- 3 933 484          US-A- 4 668 265
US-A- 4 904 290          US-A- 5 176 729**

• **PATENT ABSTRACTS OF JAPAN vol. 018, no.
632 (C-1280), 2 décembre 1994 (1994-12-02) -&
JP 06 240392 A (MITSUBISHI MATERIALS
CORP), 30 août 1994 (1994-08-30)**

**Description**

La présente invention concerne un procédé de fabrication de laine minérale par fibrage d'une composition minérale en fusion, utilisant des outils en alliage à base de cobalt doué de résistance mécanique à haute température en milieu oxydant tel que le verre fondu, et des alliages à base de cobalt utilisables à haute température, notamment pour la réalisation d'articles pour l'élaboration et/ou la transformation à chaud du verre ou autre matière minérale, tels que des organes de machines de fabrication de laine minérale.

Une technique de fibrage, dite par centrifugation interne, consiste à laisser tomber continûment du verre liquide à l'intérieur d'un ensemble de pièces de révolution tournant à très grande vitesse de rotation autour de leur axe vertical. Une pièce maîtresse, dénommée « assiette », reçoit le verre contre une paroi dite « bande » percée de trous, que le verre traverse sous l'effet de la force centrifuge pour s'en échapper de toutes parts sous la forme de filaments fondus. Un brûleur annulaire situé au-dessus de l'extérieur de l'assiette, produisant un courant de gaz descendant longeant la paroi extérieure de la bande, dévie ces filaments vers le bas en les étirant. Ceux-ci se « solidifient » ensuite sous la forme de laine de verre.

L'assiette est un outil de fibrage très sollicité thermiquement (chocs thermiques lors des démarrages et arrêts, et établissement en utilisation stabilisée d'un gradient de température le long de la pièce), mécaniquement (force centrifuge, érosion due au passage du verre) et chimiquement (oxydation et corrosion par le verre fondu, et par les gaz chauds sortant du brûleur autour de l'assiette). Ses principaux modes de détérioration sont : la déformation par fluage à chaud des parois verticales, l'apparition de fissures horizontales ou verticales, l'usure par érosion des orifices de fibrage, qui nécessitent le remplacement pur et simple des organes. Leur matériau constitutif se doit donc de résister pendant un temps de production suffisamment long pour rester compatible avec les contraintes techniques et économiques du procédé. On recherche à cet effet des matériaux doués d'une certaine ductilité, de résistance au fluage et résistance à la corrosion et/ou oxydation.

Un matériau conventionnel pour la réalisation de ces outils est un superalliage à base de nickel et de chrome renforcé par des carbures de chrome et de tungstène, utilisable jusqu'à une température maximale de l'ordre de 1000 à 1050°C.

Pour fibrer des verres à plus haute température, notamment pour fabriquer de la laine minérale à partir de verres très visqueux tels que le basalte, on a proposé d'utiliser des superalliages à base de cobalt, élément réfractaire (point de fusion égal à 1495°C) qui apporte à la matrice de l'alliage une résistance mécanique intrinsèque à haute température supérieure à celle d'une matrice à base de nickel.

Ces alliages contiennent toujours du chrome pour la résistance à l'oxydation, ainsi que généralement du carbone et du tungstène pour obtenir un effet de renforcement par précipitation de carbures. Ils renferment également du nickel en solution solide qui stabilise le réseau cristallin du cobalt en cubique face centrée à toutes températures.

On connaît ainsi de WO-A-99/16919 un alliage à base de cobalt ayant des propriétés mécaniques améliorées à haute température, comprenant essentiellement les éléments suivants ( en pourcentage pondéral de l'alliage ) :

| Cr | 26 à 34% |
|---|---|
| Ni | 6 à 12% |
| W | 4 à 8% |
| Ta | 2 à 4% |
| C | 0,2 à 0,5% |
| Fe | moins de 3% |
| Si | moins de 1 % |
| Mn | moins de 0,5% |
| Zr | moins de 0,1 % |

le reste étant constitué par du cobalt et des impuretés inévitables, le rapport molaire du tantale par rapport au carbone étant de l'ordre de 0,4 à 1.

La sélection des proportions en carbone et tantale est destinée à former dans l'alliage un réseau dense mais discontinu de carbures intergranulaires constitués essentiellement par des carbures de chrome sous forme $Cr_7C_3$ et $(Cr,W)_{23}C_6$ et par des carbures de tantale TaC. Cette sélection confère à l'alliage des propriétés mécaniques et de résistance à l'oxydation améliorées à haute température, permettant le fibrage d'un verre fondu dont la température est de 1080°C.

L'invention s'est donné pour objectif de réaliser le fibrage de verre ou matériau similaire à des températures encore plus élevées, pour travailler une palette plus variée de compositions de matières minérales.

A cet égard, l'invention a pour objet un procédé de fabrication de laine de minérale par centrifugation interne, dans lequel on déverse un débit de matière minérale en fusion dans une assiette de fibrage dont la bande périphérique est percée d'une multitude d'orifices par lesquels s'échappent des filaments de matière minérale fondue qui sont ensuite étirés en laine sous l'action d'un gaz, caractérisé en ce que la température de la matière minérale dans l'assiette est d'au moins 1100°C et en ce que l'assiette de fibrage est constituée d'un alliage exempt de B, Hf à base de cobalt comprenant les éléments suivants (en pourcentage pondéral de l'alliage) :

| Cr | 23 à 34% |
| Ni | 6 à 12% |
| Ta | 4,2 à 10% |
| C | 0,2 à 1,2% |
| W | 0 à 8% |
| Fe | moins de 3% |
| Si | moins de 1 % |
| Mn | moins de 0,5% |
| Zr | moins de 0,1% |

le reste étant constitué par du cobalt et des impuretés inévitables, le rapport molaire du tantale par rapport au carbone étant d'au moins 0,3.

Ce procédé se caractérise notamment par l'utilisation d'un alliage très riche en tantale par rapport aux alliages connus. Dans une telle composition d'alliage, le renfort intra- et intergranulaire fait appel essentiellement au tantale, présent notamment aux joints de grains sous forme de carbures TaC.

De manière très surprenante, on a constaté que ces alliages présentent des caractéristiques mécaniques excellentes à haute température de l'ordre de 1200 à 1300°C, qui leur permettent de résister aux contraintes très élevées imposées par la technique de fibrage par centrifugation, malgré la présence de milieux oxydants (verre, air chaud) très agressifs.

En effet, les inventeurs ont pu observer que pour des températures de fibrage aussi élevées que 1150-1200°C et plus, la résistance mécanique est le facteur prépondérant dans la durée de vie des assiettes. Alors que d'autres alliages, notamment selon WO-A-99/16919 ont une résistance à l'oxydation et à la corrosion par le verre excellente, leurs propriétés mécaniques se révèlent insuffisantes à partir de 1100°C, en particulier de 1150°C, causant la ruine rapide de l'assiette.

Le procédé selon l'invention se caractérise par l'utilisation d'alliages présentant un bon compromis entre la résistance mécanique et la résistance à l'oxydation à partir de 1100°C, et avantageusement de 1150°C. Ce compromis est obtenu avec des alliages dont les zones intergranulaires sont riches en précipités de carbure de tantale qui ont un point de fusion élevé et jouent un rôle de renfort mécanique en s'opposant au fluage intergranulaire à très haute température. La teneur élevée en tantale présent dans l'alliage a en outre un effet notable sur la tenue à l'oxydation :

- dans la matrice, le tantale présent en solution solide ou sous forme de fins carbures TaC intragranulaires peut former des oxydes $Ta_2O_5$ qui se mêlent à la couche superficielle d'oxyde de chrome $Cr_2O_3$ d'auto-passivation à laquelle ils apportent davantage de cohésion et d'accrochage vis-à-vis de l'alliage ;
- aux joints de grains, les carbures de tantale intergranulaires proches de la surface de l'assiette s'oxydent sur place en $Ta_2O_5$, les amas de $Ta_2O_5$ formant des « bouchons » empêchant la pénétration du milieu agressif (verre liquide, gaz chauds) dans les espaces intergranulaires.

L'alliage ainsi obtenu reste stable à haute température grâce à une dissolution à l'état solide limitée du TaC à 1200-1300°C.

Le procédé selon l'invention permet donc de fibrer du verre ou une composition minérale fondue similaire ayant une température de liquidus $T_{liq}$ de l'ordre de 1100°C ou plus, plus particulièrement 1140°C ou plus.

En général, le fibrage de ces compositions minérales fondues peut être effectué dans une plage de températures (pour la composition fondue parvenant dans l'assiette) comprise entre $T_{liq}$ et $T_{log2,5}$ où $T_{log2,5}$ est la température à laquelle la composition fondue présente une viscosité de $10^{2,5}$ poise (dPa.s). Pour fibrer selon l'invention à partir de 1150°C, les compositions correspondantes sont de préférence celles dont $T_{liq}$ est d'au moins 1140°C.

Parmi ces compositions de matière minérale, on peut préférer des compositions renfermant une quantité de fer significative, qui sont moins corrosives vis-à-vis du métal constitutif des organes de fibrage.

Ainsi, le procédé selon l'invention utilise avantageusement une composition de matière minérale oxydante notamment vis-à-vis du chrome, capable de réparer ou reconstituer la couche protectrice d'oxyde $Cr_2O_3$ qui s'établit en surface. A cet égard, on peut préférer des compositions renfermant du fer essentiellement sous forme ferrique

(oxyde $Fe_2O_3$), notamment avec un rapport molaire des degrés d'oxydation II et III, exprimé par le rapport $\frac{FeO}{FeO + Fe_2O_3}$ de l'ordre de 0,1 à 0,3, notamment 0,15 à 0,20.

Avantageusement, la composition de matière minérale renferme une teneur en fer élevée permettant une cinétique rapide de reconstitution de l'oxyde de chrome avec un taux d'oxyde de fer (taux dit « fer total », correspondant à la teneur totale en fer exprimée conventionnellement sous forme de $Fe_2O_3$ équivalent) d'au moins 3%, de préférence d'au moins 4%, notamment de l'ordre de 4 à 12%, en particulier d'au moins 5%. Dans la plage de redox ci-dessus, cela correspond à une teneur en fer ferrique $Fe_2O_3$ seul d'au moins 2,7%, de préférence au moins 3,6%

De telles compositions sont connues notamment de WO-99/56525 et comprennent avantageusement les constituants suivants :

| | |
|---|---|
| $SiO_2$ | 38-52%, de préférence 40-48% |
| $Al_2O_3$ | 17-23% |
| $SiO_2$+ $Al_2O_3$ | 56-75%, de préférence 62-72% |
| RO (CaO+MgO) | 9-26%, de préférence 12-25% |
| MgO | 4-20%, de préférence 7-16% |
| MgO/CaO | $\geq$ 0,8 , de préférence $\geq$ 1,0 ou $\geq$ 1,15 |
| $R_2O$ ($Na_2O+K_2O$) | $\geq$ 2% |
| $P_2O_5$ | 0-5% |
| Fer total ($Fe_2O_3$) | $\geq$ 1,7%, de préférence $\geq$ 2% |
| $B_2O_3$ | 0-5% |
| MnO | 0-4% |
| $TiO_2$ | 0-3% |

D'autres compositions se révèlent particulièrement appropriées pour le procédé selon l'invention.

Elles sont caractérisées par les pourcentages pondéraux suivants :

| | | | |
|---|---|---|---|
| $SiO_2$ | 39-55%, | de préférence | 40-52% |
| $Al_2O_3$ | 16-27%, | -- | 16-25% |
| CaO | 3-35%, | -- | 10-25% |
| MgO | 0-15%, | -- | 0-10% |
| $Na_2O$ | 0-15%, | -- | 6-12% |
| $K_2O$ | 0-15%, | -- | 3-12% |
| $R_2O$ ( $Na_2O + K_2O$) | 10-17%, | -- | 12-17% |
| $P_2O_5$ | 0-3%, | -- | 0-2% |
| Fer total ($Fe_2O_3$) | 0-15%, | -- | 4-12% |
| $B_2O_3$ | 0-8%, | -- | 0-4% |
| $TiO_2$ | 0-3%, | | |

MgO étant compris entre 0 et 5%, notamment entre 0 et 2% lorsque $R_2O \leq$ 13,0%.

Avantageusement, la composition de laine minérale comprend les constituants ci-après selon les pourcentages pondéraux suivants :

| | | | |
|---|---|---|---|
| $SiO_2$ | 39-55%, | de préférence | 40-52% |
| $Al_2O_3$ | 16-25%, | -- | 17-22 % |
| CaO | 3-35%, | -- | 10-25% |
| MgO | 0-15%, | -- | 0-10% |
| $Na_2O$ | 0-15%, | -- | 6-12% |
| $K_2O$ | 0-15%, | -- | 6-12% |
| $R_2O$ ( $Na_2O + K_2O$) | 13,0-17%, | | |
| $P_2O_5$ | 0-3 %, | -- | 0-2% |
| Fer total ($Fe_2O_3$) | 0-15%, | -- | 2-3% |
| $B_2O_3$ | 0-8 %, | -- | 0-4% |

**4**

(suite)

| TiO$_2$ | 0-3%, | | |
|---------|-------|---|---|

Les compositions peuvent comporter jusqu'à 2 ou 3% de composés à considérer comme des impuretés non analysées, comme cela est connu dans ce genre de composition.

De par l'association d'un taux d'alumine élevé, compris entre 16 et 27%, de préférence supérieur à 17% et/ou de préférence inférieur à 25%, notamment à 22%, pour une somme d'éléments formateurs, silice et alumine, comprise entre 57 et 75%, de préférence supérieur à 60% et/ou de préférence inférieur à 72%, notamment à 70%, avec une quantité d'alcalins (R$_2$O : soude et potasse) élevée comprise entre 10 et 17%, avec MgO compris entre 0 et 5%, notamment entré 0 et 2%, lorsque R$_2$O ≤ 13,0%, les compositions possèdent la propriété remarquable d'être fibrables dans un vaste domaine de température et confèrent en outre un caractère biosoluble à pH acide aux fibres obtenues. Selon des réalisations particulières, le taux d'alcalin est de préférence supérieur à 12%, notamment à 13,0% et même 13,3% et/ou de préférence inférieur à 15%, notamment inférieur à 14,5%.

Ce domaine de compositions s'avère particulièrement intéressant car on observe, que contrairement aux opinions reçues, la viscosité du verre fondu ne baisse pas significativement avec l'augmentation du taux d'alcalins. Cet effet remarquable permet d'augmenter l'écart entre la température correspondant à la viscosité du fibrage et la température de liquidus de la phase qui cristallise et ainsi d'améliorer considérablement les conditions de fibrage et rend notamment possible le fibrage en centrifugation interne d'une nouvelle famille de verres biosolubles.

Selon un mode de réalisation, les compositions possèdent des taux d'oxyde de fer compris entre 5 et 12%, notamment entre 5 et 8%, ce qui peut permettre d'obtenir une tenue au feu des matelas de laines minérales.

Avantageusement, ces compositions respectent le ratio :

$$(Na_2O + K_2O)/Al_2O_3 \geq 0,5 \text{ , de préférence } (Na_2O + K_2O)/Al_2O_3 \geq 0,6 \text{ , notamment } (Na_2O + K_2O)/Al_2O_3 \geq 0,7 \text{ qui}$$

apparaît favoriser l'obtention d'une température à la viscosité de fibrage supérieure à la température de liquidus.

Selon une variante, les compositions suivant l'invention ont de préférence un taux de chaux compris entre 10 et 25%, notamment supérieur à 12%, de préférence supérieur à 15% et/ou de préférence inférieur à 23%, notamment inférieur à 20%, et même inférieur à 17% associé à un taux de magnésie compris entre 0 et 5%, avec de préférence moins de 2% de magnésie, notamment moins de 1% de magnésie et/ou un taux de magnésie supérieur à 0,3%, notamment supérieur à 0,5%.

Selon une autre variante, le taux de magnésie est compris entre 5 et 10% pour un taux de chaux compris entre 5 et 15%, et de préférence entre 5 et 10%.

Ajouter du P$_2$O$_5$, qui est optionnel, à des teneurs comprises entre 0 et 3%, notamment supérieur à 0,5% et/ou inférieur à 2%, peut permettre d'augmenter la biosolubilité à pH neutre. Optionnellement, la composition peut aussi contenir de l'oxyde de bore qui peut permettre d'améliorer les propriétés thermiques de la laine minérale, notamment en tendant à abaisser son coefficient de conductivité thermique dans la composante radiative et également augmenter la biosolubilité à pH neutre. On peut également inclure du TiO$_2$ dans la composition, de manière optionnelle, par exemple jusqu'à 3%. D'autres oxydes tels que BaO, SrO, MnO, Cr$_2$O$_3$, ZrO$_2$, peuvent être présents dans la composition, chacun jusqu'à des teneurs de 2% environ.

Pour ces compositions, la différence entre la température correspondant à une viscosité de 10$^{2,5}$ poises (decipascal.seconde), notée T$_{log\,2,5}$ et le liquidus de la phase qui cristallise, notée T$_{Liq}$ est de préférence d'au moins 10°C. Cette différence, T$_{log\,2,5}$ - T$_{Liq}$ définit le " palier de travail " des compositions de l'invention, c'est-à-dire, la gamme de températures dans laquelle on peut fibrer, par centrifugation interne tout particulièrement. Cette différence s'établit de préférence à au moins 20 ou 30°C, et même à plus de 50°C, notamment plus de 100°C.

L'invention peut être mise en oeuvre de diverses façons avantageuses reposant sur le choix de la composition de l'alliage.

Le nickel, présent dans l'alliage sous forme d'une solution solide en tant qu'élément stabilisant la structure cristalline du cobalt, est utilisé dans la gamme de proportions habituelle de l'ordre de 6 à 12%, avantageusement de 8 à 10% en poids de l'alliage.

Le chrome contribue à la résistance mécanique intrinsèque de la matrice dans laquelle il est présent en partie en solution solide, ainsi que sous forme de carbures essentiellement de type Cr$_{23}$C$_6$ en dispersion fine à l'intérieur des grains où ils apportent une résistance au fluage intragranulaire. Il peut contribuer également au renforcement intergranulaire de l'alliage sous forme de carbures de type Cr$_7$C$_3$ ou Cr$_{23}$C$_6$ présents aux joints de grains, qui empêchent le glissement grain sur grain. Un traitement thermique détaillé plus loin permet de convertir les carbures Cr$_7$C$_3$ en Cr$_{23}$C$_6$ plus stables à haute température. Le chrome contribue à la résistance à la corrosion en tant que précurseur d'oxyde de chrome formant une couche protectrice à la surface exposée au milieu oxydant. Une quantité minimale de chrome est nécessaire pour la formation et le maintien de cette couche protectrice. Une teneur en chrome trop élevée est cependant néfaste à la résistance mécanique et à la ténacité aux températures élevées, car elle conduit à une rigidité trop élevée et une aptitude à l'allongement sous contrainte trop faible incompatible avec les contraintes à haute température.

De façon générale, la teneur en chrome d'un alliage utilisable selon l'invention sera de 23 à 34% en poids, de préférence de l'ordre de 26 à 32% en poids, avantageusement d'environ 28 à 30% en poids.

Le tantale est présent en solution solide dans la matrice de cobalt dont cet atome lourd distord localement le réseau cristallin et gêne, voire bloque, la progression des dislocations quand le matériau est soumis à un effort mécanique, contribuant ainsi à la résistance intrinsèque de la matrice. Il est capable en outre de former avec le carbone des carbures TaC présents, d'une part en dispersion fine à l'intérieur des grains et où ils empêchent le fluage intragranulaire, d'autre part aux joints de grains où ils apportent un renforcement intergranulaire, éventuellement complété par des carbures de chrome.

La teneur minimale en tantale permettant d'obtenir la résistance mécanique à très haute température selon l'invention est de l'ordre de 4,2%, la limite supérieure pouvant être choisie à environ 10%. La teneur en tantale est, de préférence, de l'ordre de 4,2 à 10%, très avantageusement de 4,5 à 10%, plus particulièrement 5 à 10%. La quantité de tantale est plus avantageusement de l'ordre de 5,5 à 9% en poids, notamment d'environ 6 à 8,5%.

Le carbone est un constituant essentiel de l'alliage, nécessaire à la formation des précipités de carbures métalliques.

La teneur en carbone détermine directement la quantité de carbures présente dans l'alliage. Elle est d'au moins 0,2% pour obtenir le renfort minimum désiré, mais limitée à au plus 1,2% pour éviter que l'alliage ne devienne dur et difficile à usiner en raison d'une trop grande densité de renforts. Le manque de ductilité de l'alliage à de telles teneurs l'empêche d'accommoder sans se rompre une déformation imposée (par exemple d'origine thermique) et de résister suffisamment à la propagation des fissures.

Avantageusement la teneur en carbone est de l'ordre de 0,3 à 1,1% en poids, de préférence de l'ordre de 0,35 à 1,05% en poids.

Selon l'invention, on ajuste la composition de l'alliage pour avoir une présence significative de carbures de tantale aux joints de grains.

Dans un mode de réalisation préféré, la composition de l'alliage est telle que tous les carbures intergranulaires sont des carbures de tantale. Ceci peut être réalisé en choisissant une teneur en tantale suffisamment élevée pour déplacer les réactions de formation de carbure en faveur de la formation de TaC.

A cette fin, on choisit avantageusement des teneurs en tantale et en carbone telles que le rapport molaire Ta/C est supérieur ou égal à 0,9, de préférence est d'environ 1 à 1,2.

Les carbures de tantale TaC présentent une stabilité à haute température remarquable ; les inventeurs ont en effet observé par des coupes métallographiques que la structure de ces carbures est peu affectée par une exposition à haute température de l'ordre de 1300°C. On ne peut observer qu'une « dissolution » limitée des carbures TaC par départ probable de Ta et C dans la matrice sans conséquence pour les propriétés mécaniques. Ainsi, un alliage dont le renfort intergranulaire est constitué uniquement de carbures de tantale TaC garantit la pérennité du renfort dans dés conditions d'utilisation extrêmes à très haute température.

Les carbures de tantale contribuent également à la résistance à l'oxydation de l'alliage dans de telles conditions, car en s'oxydant partiellement en particules de $Ta_2O_5$ ils forment au niveau des joints de grains des amas qui agissent comme des bouchons qui empêchent la pénétration du milieu oxydant à l'intérieur du matériau. Le milieu oxydant est maintenu en surface de l'outil, où la couche protectrice d'oxyde de chrome conserve une bonne adhérence à l'alliage de base semble-t-il grâce à la formation dans la zone superficielle de l'assiette de $Ta_2O_5$ qui favorise l'accrochage de $Cr_2O_3$ sur l'alliage.

On obtient ainsi un renfort efficace et durable ce qui permet de n'utiliser qu'une relativement faible teneur en carbone qui ne nuit pas à l'usinabilité du matériau.

Dans ce mode de réalisation, la teneur en carbone est avantageusement d'environ 0,3 à 0,55% en poids de l'alliage, de préférence d'environ 0,35 à 0,5%.

Ces teneurs assez basses en carbone permettent d'obtenir une phase de renfort précipité intergranulaire suffisamment dense mais non continue qui ne favorise donc pas la propagation des fissures aux joints de grains.

Dans un mode de réalisation moins préféré, la composition d'alliage est telle que les carbures intergranulaires ne comportent pas uniquement des carbures de tantale, ceux-ci étant toutefois présents en assez grande quantité. Ceci peut être réalisé en choisissant une teneur en carbone relativement élevée pour que la proportion de TaC par rapport aux carbures intergranulaires totaux fournisse la quantité de carbures de tantale désirée.

A cette fin, on choisit avantageusement la teneur en carbone de l'ordre de 0,8 à 1,2%, de préférence de l'ordre de 0,9 à 1,1%, en particulier d'environ 0,95 à 1%.

Avec de telles teneurs en carbone, le réseau de carbures intergranulaires est très dense, mais ne se révèle pas préjudiciable pour une utilisation à température élevée supérieure à 1150°C. En effet, à partir de cette température, une partie des carbures $M_{23}C_6$ a tendance à se dissoudre en solution solide, de sorte que la phase précipitée intergranulaire gagne peu à peu en discontinuité et lutte activement contre la propagation des fissures.

Un rapport molaire tantale au carbone Ta/C inférieur à 0,9 peut alors être aussi faible que 0,3, de préférence 0,35, la proportion de TaC parmi le total des carbures intergranulaires étant de l'ordre de 50% en volume, le reste étant constitué par des carbures de type $M_{23}C_6$ où M est essentiellement le chrome.

Avantageusement, le rapport molaire Ta/C est de l'ordre de 0,35 à 0,45.

Malgré la présence de carbures $M_{23}C_6$ moins stables à haute température, le renfort intergranulaire reste efficace à 1200-1300°C grâce à la présence en quantité suffisante de TaC intacts ou oxydés en $Ta_2O_5$. La présence de chrome aux joints de grains constitue par ailleurs une source de diffusion de chrome utile pour la résistance à la corrosion.

Du tungstène peut éventuellement être présent dans l'alliage de l'assiette. Il se trouve alors en solution solide dans la matrice dont il améliore la résistance mécanique intrinsèque par un effet de distorsion du réseau cristallin du cobalt. Il peut aussi participer avec le chrome à la formation de carbures $M_{23}C_6$ intergranulaires (que l'on note alors $(Cr,W)_{23}C_6$) lorsque le rapport molaire Ta/C est inférieur à 0,9.

Il est toutefois apparu que, pour les deux modes de réalisation présentés ci-dessus, la présence de tungstène pouvait avoir un effet nuisible à la résistance mécanique de l'alliage.

En effet, on a observé que les alliages renfermant du tungstène présentent une microstructure révélant la formation d'une nouvelle phase intergranulaire qui serait constituée de l'une des phases TCP « Topologically Close Compact », la phase sigma CoCr, qui fragiliserait l'alliage. La formation de cette phase serait due à une trop forte présence des éléments censés passer en solution dans le cobalt cristallisé. Les alliages selon l'invention se caractérisant déjà par une relativement forte proportion de tantale, la présence additionnelle de tungstène en plus du chrome, du nickel et du carbone, forcerait une partie des éléments de la matrice à s'associer dans les joints de grains ou même dans la matrice. On a, en outre, pu observer, après exposition d'alliages contenant du tungstène à des températures très élevées de l'ordre de 1300°C, que la composition chimique locale conduit à la manière d'un eutectique à une fusion au joint de grain. En l'absence de tungstène, le point de fusion au joint de grain serait plus élevé et il n'observerait pas cette fusion locale à 1300°C ; de fait, on n'observe pas cette fusion et le joint de grain reste intact même à 1300°C.

Ainsi, un procédé préféré selon l'invention utilise un alliage dénué de tungstène, ou sensiblement dénué de tungstène, étant entendu qu'une quantité de tungstène minime peut être tolérée de l'ordre de grandeur de traces d'une impureté métallique couramment admissible au sens métallurgique. Cet alliage est en particulier préféré pour des températures de travail très élevées, notamment lorsque la composition minérale arrive dans l'assiette avec une température d'au moins 1150°C, en particulier si la composition minérale a une température de liquidus de 1140°C ou plus. Mais cet alliage présente également des propriétés mécaniques intéressantes à plus faible température, de l'ordre de 1000°C dans l'assiette, notamment une tenue au fluage améliorée qui autorise de nouvelles conditions de fibrage au niveau des dimensions de l'assiette ou de la vitesse de rotation. Dans un procédé très préféré, l'alliage dénué de tungstène est renforcé exclusivement de carbures de tantale et ne souffre qu'une légère modification de la densité de renfort intergranulaire.

L'alliage peut contenir d'autres éléments constitutifs usuels ou impuretés inévitables. Il comporte en général :

- du silicium en tant que désoxydant du métal fondu lors de l'élaboration et du moulage de l'alliage, à raison de moins de 1% en poids ;
- du manganèse également désoxydant, à raison de moins de 0,5% en poids ;
- du zirconium en tant que piégeur d'éléments indésirables tels que le soufre ou le plomb, à raison de moins de 0,1% en poids ;
- du fer, en une proportion pouvant aller jusqu'à 3% en poids sans altération des propriétés du matériau ;
- la quantité cumulée des autres éléments introduits à titre d'impuretés avec les constituants essentiels de l'alliage (« impuretés inévitables ») représente avantageusement moins de 1% en poids de la composition de l'alliage.

Les alliages selon l'invention sont exempts de B, Hf et de préférence exempts de Y, Dy, Re et autres terres rares.

Parmi les alliages décrits plus haut, certains sont également des objets de l'invention.

L'invention a en particulier pour objet un alliage à base de cobalt doué de résistance mécanique à haute température en milieu oxydant, comprenant en outre du chrome, du nickel, du tantale et du carbone, caractérisé en ce qu'il ne renferme pas de tungstène, de B et Hf et en ce qu'il se compose essentiellement des éléments suivants (les proportions étant indiquées en pourcentage pondéral de l'alliage) :

| | |
|---|---|
| Cr | 23 à 34% |
| Ni | 6 à 12% |
| Ta | 4,2 à 10% |

(suite)

| | |
|---|---|
| C | 0,2 à 1,2% |
| Fe | moins de 3% |
| Si | moins de 1% |
| Mn | moins de 0,5% |
| Zr | moins de 0,1% |

le reste étant constitué par du cobalt et des impuretés inévitables, le rapport molaire Ta/C étant d'au moins 0,3, de préférence au moins 0,35.

Cet alliage selon l'invention se caractérise essentiellement par une teneur en tantale élevée et par l'absence de tungstène. Ceci permet de constituer des phases de renfort, précipitées ou en solution solide, principalement à base de tantale, qui assurent une résistance élevée à haute température.

Les teneurs en chrome, nickel, carbone peuvent être choisies dans les plages avantageuses indiquées précédemment.

La teneur en tantale est de préférence de l'ordre de 4,2 à 10%, très avantageusement de 4,5 à 10%.

De préférence, le rapport molaire Ta/C est supérieur ou égal à 0,9 ; avantageusement, il est d'environ 1 à 1,2. La teneur en carbone est alors avantageusement de 0,3 à 0,55% en poids, de préférence d'environ 0,35 à 0,5%.

En variante, la teneur en carbone est de l'ordre de 0,8 à 1,2%, de préférence de 0,9 à 1,1%, en particulier d'environ 0,95 à 1%. Le rapport molaire Ta/C est alors avantageusement de 0,3 à 0,5, avanteugement de 0,35 à 0,45.

Ces alliages dénués de tungstène sont particulièrement appréciables pour conduire un procédé à haute température d'au moins 1150 à 1200°C, mais peuvent bien entendu être employés dans des procédés de fabrication de laine minérale plus courants où l'assiette est portée à une température de l'ordre de 900 à 1100°C.

Un autre alliage à base de cobalt objet de l'invention comprend les éléments suivants :

| | |
|---|---|
| Cr | 23 à 34% |
| Ni | 6 à 12% |
| Ta | 4,2 à 10% |
| W | 4à8% |
| C | 0,8 à 1,2% |
| Fe | moins de 3% |
| Si | moins de 1 % |
| Mn | moins de 0,5% |
| Zr | moins de 0,1% |

le reste étant constitué par du cobalt et des impuretés inévitables, le rapport molaire Ta/C étant d'au moins 0,3, de préférence de l'ordre de 0,3 à 0,5, avantageusement d'au moins 0,35, en particulier de 0,35 à 0,45.

Les teneurs en chrome, nickel, tantale, carbone peuvent être choisies dans les plages avantageuses indiquées précédemment.

Les alliages utilisables selon l'invention, exempts d'éléments hautement réactifs tels que B, Hf, les terres rares dont Y, Dy, Re, peuvent être mis en forme très facilement par fusion et coulée classique avec des moyens conventionnels, notamment par fusion inductive sous atmosphère au moins partiellement inerte et coulée en moule de sable.

Ces alliages renfermant une certaine proportion de tungstène sont moins préférés que les alliages précédents car ils permettent plutôt de travailler autour de 1100 à 1150°C. Comme précédemment, ils peuvent être utilisés dans des procédés où l'outil est porté à une température de 900 à 1100°C.

Après coulée, une microstructure particulière peut avantageusement être atteinte par un traitement thermique en deux étapes, qui permet notamment de convertir les carbures de type $M_7C_3$ en $M_{23}C_6$ :

- une phase de mise en solution comprenant un recuit à une température de 1100 à 1250°C, notamment de l'ordre de 1200 à 1250°C, pendant une durée pouvant aller notamment de 1 à 4 heures, avantageusement de l'ordre de 2 heures ; et
- une phase de précipitation de carbures comprenant un recuit à une température de 850 à 1050°C, notamment de l'ordre de 1000°C, pendant une durée pouvant aller de 5 à 20 heures, avantageusement de l'ordre de 10 heures.

L'invention a également pour objet un procédé de fabrication d'un article par fonderie à partir des alliages décrits précédemment comme objet de l'invention, éventuellement avec les étapes du traitement thermique ci-dessus.

Le procédé peut comprendre au moins une étape de refroidissement, après la coulée et/ou après la première phase de traitement thermique, ainsi qu'à l'issue du traitement thermique.

Les refroidissements intermédiaires et/ou final peuvent se faire par exemple par refroidissement à l'air, notamment avec un retour à la température ambiante.

Le procédé peut comprendre en outre une étape de forgeage après la coulée.

Les alliages objets de l'invention peuvent être utilisés pour fabriquer toutes sortes de pièces sollicitées mécaniquement à haute température et/ou amenées à travailler en milieu oxydant ou corrosif. L'invention a encore pour objets de tels articles fabriqués à partir d'un alliage selon l'invention, notamment par fonderie.

Parmi de telles applications on peut citer notamment la fabrication d'articles utilisables pour l'élaboration ou la transformation à chaud du verre, par exemple des assiettes de fibrage pour la fabrication de laine minérale.

Bien que l'invention ait été décrite principalement dans ce cadre de la fabrication de laine minérale, elle peut être appliquée à l'industrie verrière en général pour réaliser des éléments ou accessoires de four, de filière, ou de feeder notamment pour la production de fils de verre textile, de verre d'emballage.

En dehors de l'industrie verrière, l'invention peut s'appliquer à la fabrication d'articles très divers, lorsque ceux-ci doivent présenter une résistance mécanique élevée en milieu oxydant et/ou corrosif, en particulier à haute température.

De manière générale, ces alliages peuvent servir à réaliser tout type de pièces fixe ou mobile en alliage réfractaire servant au fonctionnement ou à l'exploitation d'un four de traitement thermique à haute température (au-delà de 1100°C), d'un échangeur de chaleur ou d'un réacteur de l'industrie chimique. Il peut ainsi s'agir par exemple de pales de ventilateur chaud, de support de cuisson, de matériel d'enfournement... Ils peuvent aussi servir à réaliser tout type de résistance chauffante destinée à fonctionner en atmosphère chaude oxydante, et à réaliser des éléments de turbine, entrant dans des moteurs de véhicule terrestre, maritime ou aérien ou dans toute autre application ne visant pas des véhicules, par exemple des centrales.

L'invention a ainsi pour objet l'utilisation en atmosphère oxydante à une température d'au moins 1100°C d'un article constitué d'un alliage de cobalt tel que définit précédemment.

L'invention est illustrée par les exemples suivants ainsi que les figures 1 à 7 des dessins annexés sur lesquels :

- la figure 1 représente une observation microphotographique de la structure d'un alliage selon l'invention,
- la figure 2 est un graphe illustrant les propriétés mécaniques de cet alliage,
- les figures 3 et 4 représentent des observations microphotographiques de la structure d'un alliage comparatif,
- les figures 5 et 6 sont des graphes illustrant les propriétés mécaniques comparées de différents alliages,
- la figure 7 représente une observation microphotographique de la structure d'un autre alliage utilisé selon l'invention.

EXEMPLE 1

Par la technique de fusion inductive sous atmosphère inerte (notamment argon) on prépare une charge fondue de la composition suivante que l'on met ensuite en forme par simple coulée en moule de sable :

|          | Cr            | 28,3%   |
|----------|---------------|---------|
|          | Ni            | 8,68%   |
|          | C             | 0,37%   |
|          | Ta            | 5,7%    |
|          | W             | 0%      |
| Résiduels | Fe           | < 3%    |
|          | Si            | < 1 %   |
|          | Mn            | < 0,5%  |
|          | Zr            | < 0,1%  |
|          | autres sommés | < 1%    |

le reste étant constitué par du cobalt.

La coulée est suivie par un traitement thermique comportant une phase de mise en solution pendant 2 heures à 1200°C et une phase de précipitation des carbures secondaires pendant 10 heures à 1000°C, chacun de ces paliers finissant par un refroidissement à l'air jusqu'à la température ambiante.

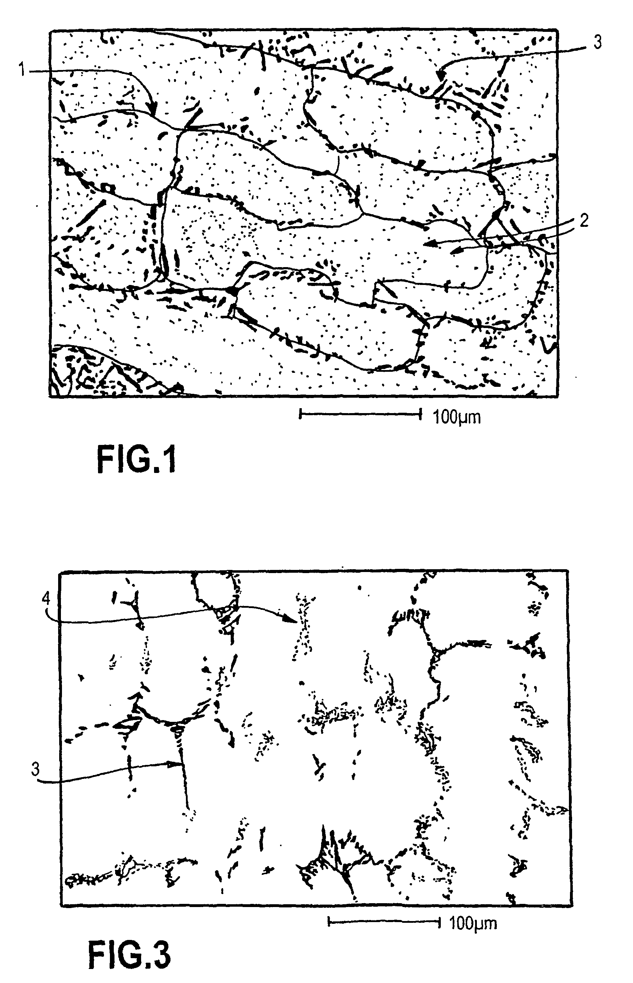

La microstructure de l'alliage obtenu, révélée par microscopie optique ou électronique, suivant les techniques métallographiques classiques et éventuellement microanalyse X, est composée d'une matrice de cobalt stabilisée en structure cubique face centrée par la présence du nickel, comportant en solution solide du chrome et du tantale avec des précipités de carbures présents à l'intérieur des grains et aux joints de grains. Cette structure est visible sur la figure 1 qui représente une observation de l'alliage au microscope électronique à balayage (MEB) avec un grossissement de 250 : les joints de grains qui n'apparaissent pas sur la microphotographie avec le grossissement utilisé ont été figurés par les lignes 1 en trait fin. A l'intérieur des grains délimités par les joints 1, la phase intragranulaire est constituée de carbures secondaires 2 fins de type $Cr_{23}C_6$ et TaC précipités de façon régulière dans la matrice qui apparaissent sous la forme de petits points. Aux joints de grains, on trouve une phase intergranulaire dense mais discontinue composée exclusivement de carbures de tantale TaC 3 qui apparaissent comme des petits îlots de forme généralement allongée bien distincts les uns des autres.

Cette microstructure est due au rapport molaire du tantale par rapport au carbone dans la composition de l'alliage, qui est égal à 1,07.

La stabilité thermique de cette microstructure a été mise en évidence par le traitement suivant :

un échantillon d'alliage ayant subi le traitement thermique précité de mise en solution et précipitation par recuits, est porté pendant 5 heures à la température de 1300°C, après quoi on réalise une trempe à l'eau pour figer la microstructure.

On observe la structure de l'échantillon au MEB avec un grossissement de 250. Cette observation montre que la structure des joints de grains n'a que peu été affectée par le traitement thermique : on n'observe pas de début de fusion de l'alliage et des carbures TaC encore nombreux.

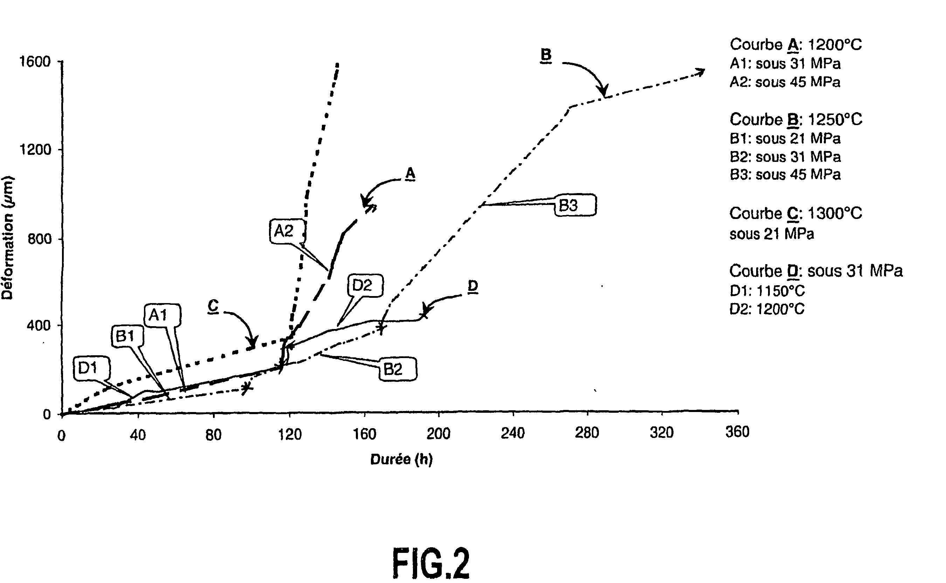

Les propriétés de résistance mécanique à haute température de l'alliage ont été évaluées dans des essais de tenue au fluage en flexion trois points à différentes températures (1200, 1250, 1300°C) sous différentes charges 21 MPa, 31 MPa, 45 MPa. Les essais ont porté sur une éprouvette parallélépipédique de 30 mm de large et de 3 mm d'épaisseur, la charge étant exercée au milieu d'un entraxe de 37 mm, soumise à chacune des températures indiquées successivement aux trois charges par ordre croissant. Une autre série de mesures a été effectuée sous charge constante à température variable. Les résultats sont illustrés par la figure 2 qui présente sur un même graphe la déformation (en μm) de l'éprouvette en fonction du temps (en heures) pour chaque essai. Le tableau 1 indique la pente des courbes de fluage trois points suivant la température et la contrainte appliquée et la durée sous charge.

L'alliage présente d'excellentes propriétés en fluage à 1200°C et 1250°C et une tenue encore appréciable à 1300°C sous la charge appliquée.

Les propriétés de résistance à l'oxydation ont été évaluées dans des essais de thermogravimétrie à 1200°C : on obtient une constante parabolique d'oxydation Kp de $96,5.10^{-12}$ $g^2.cm^{-4}.s^{-1}$ et une constante parabolique d'évaporation $K_v$ de $3,96.10^{-19}$ $g.cm^{-2}.s^{-1}$.

Les propriétés de résistance mécanique de l'alliage à moins haute température sous forte charge ont été évaluées dans des essais de tenue au fluage en flexion trois points à 1000°C sous une charge de 103 MPa, dont les résultats seront présentés plus loin à la lumière des exemples comparatifs.

La capacité de cet alliage à être utilisé pour constituer un outillage de mise en forme du verre fondu a été évaluée dans l'application à la fabrication de laine de verre. Une assiette de fibrage de 200 mm de diamètre de forme classique a été fabriquée par coulée et traitement thermique comme ci-dessus, puis utilisée dans des conditions industrielles pour fibrer un verre de composition ci-dessous à la température de l'assiette étant comprise entre 1150 et 1210°C :

| $SiO_2$ | $Al_2O3$ | Fer total ($Fe_2O_3$) | CaO | MgO | $Na_2O$ | $K_2O$ | Divers |
|---------|----------|------------------------|------|------|---------|--------|--------|
| 45,7 | 19 | 7,7 | 12,6 | 0,3 | 8 | 5,1 | 1 |

Il s'agit d'un verre relativement oxydant par rapport à un verre classique en raison de sa teneur élevée en fer et d'un redox de 0,15. Sa température de liquidus est de 1140°C.

L'assiette est utilisée avec une tirée de 2,3 tonnes par jour jusqu'à ce que son arrêt soit décidé suite à la ruine de l'assiette déclarée par une détérioration visible ou par une qualité de fibre produite devenue insuffisamment bonne. La température de la composition minérale arrivant dans l'assiette est de l'ordre de 1200 à 1240°C. La température du métal suivant le profil de l'assiette est comprise entre 1160 et 1210°C. La durée de vie (en heures) de l'assiette ainsi mesurée a été de 390 heures.

Pendant l'essai de fibrage, l'assiette a subi de nombreux chocs thermiques avec une quinzaine d'arrêts et redémarrages, sans apparition de fissures. Ceci témoigne de la bonne ductilité de l'alliage à 1100-1200°C.

La longue tenue de l'assiette est liée à la bonne résistance au fluage de l'alliage à 1200°C sous contrainte moyenne (conditions mécaniques résultant de la géométrie de l'assiette).

L'association de l'alliage de l'exemple 1 et du verre rendu moins corrodant par la présence de fer fournit des conditions favorables à la fabrication de laine minérale à très haute température.

EXEMPLE COMPARATIF 1

A des fins de comparaison, on préparé et testé dans les mêmes conditions un alliage selon WO-99/16919 de composition suivante :

|  | Cr | 29% |
|---|---|---|
|  | Ni | 8,53% |
|  | C | 0,38% |
|  | Ta | 2,95% |
|  | W | 5,77% |
| Résiduels | Fe | < 3% |
|  | Si | < 1% |
|  | Mn | < 0,5% |
|  | Zr | < 0,1% |
|  | autres sommés | < 1% |

le reste étant constitué par du cobalt.

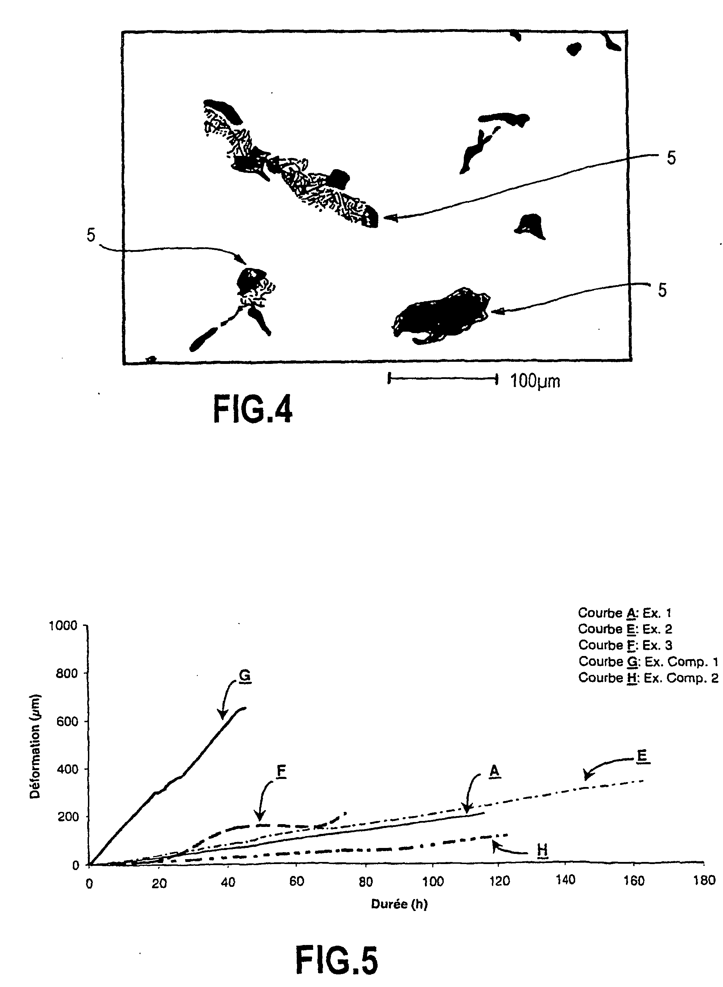

Avec un rapport Ta/C égal à 0,51 , la microstructure de cet alliage, représentée sur la figure 3, révèle la présence aux joints de grains d'environ 50% de carbures $(Cr,W)_{23}C_6$ (visibles en 4 en forme de plages eutectiques fines) et de 50% de carbures TaC (visibles en 3).

La stabilité thermique de la microstructure de cet alliage à très haute température est bien inférieure à celle de l'exemple 1, comme illustré sur la figure 4, qui représente l'observation au MEB d'un échantillon d'alliage de l'exemple comparatif 1 après 5 heures à 1300°C et trempe à l'eau.

On observe que les carbures intergranulaires ont disparu, y compris les carbures de tantale, et que des zones liquides (fondues) 5 sont apparues à 1300°C qui se sont resolidifiées à la trempe.

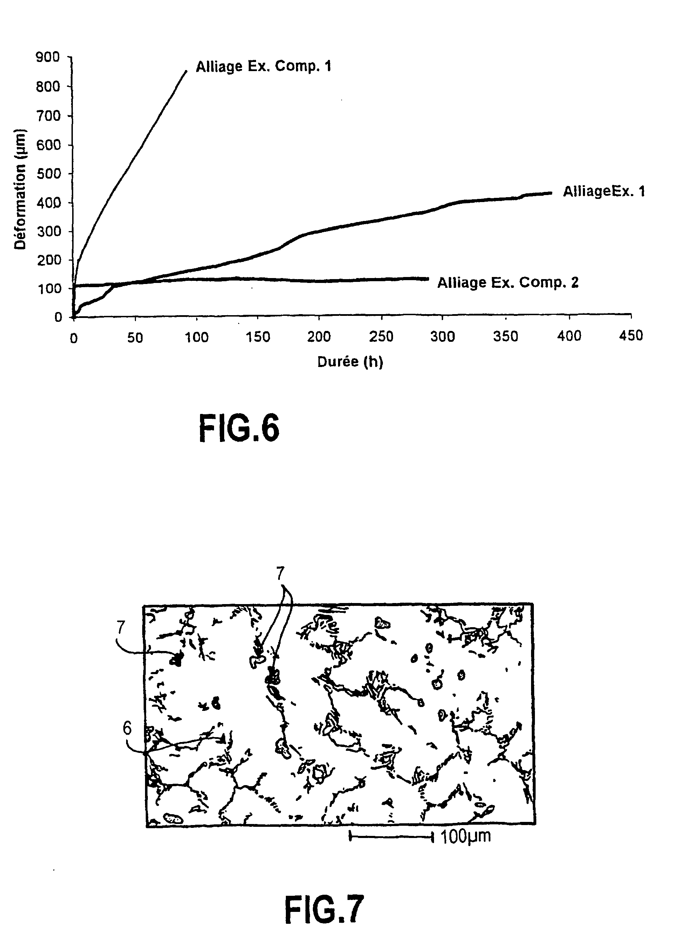

On vérifie par des essais de tenue au fluage que la résistance mécanique de l'alliage comparatif à haute température est inférieure à celle de l'alliage de l'exemple 1. Ces résultats sont rassemblés sur le graphe de la figure 5 qui présente des résultats comparés de tenue au fluage à 1200°C sous 31 MPa, sur le graphe de la figure 6 qui présente des résultats comparés de tenue au fluage à 1000°C sous 103 MPa, et dans le tableau 1.

Les propriétés de résistance à l'oxydation à 1200°C évaluées par thermogavimétrie sont : $K_p = 92,4.10^{-12}$ $g^2$. $cm^{-4}.s^{-1}$ et $K_v = 4,86.10^{-9}$ $g.cm^{-2}.s^{-1}$.

EXEMPLE COMPARATIF 2

Les figures 5 et 6 et le tableau 1 présentent aussi les caractéristiques mécaniques à haute température d'un autre alliage comparatif d'une nature différente : il s'agit d'un superalliage de type ODS dont la matrice est constituée de nickel-chrome et qui est renforcé par une phase d'oxydes tels que l'oxyde d'yttrium.

Ces alliages très performants ne peuvent être obtenus par coulée, mais par la technique délicate de métallurgie des poudres en réalisant un alliage mécanique par mécanosynthèse de poudres métalliques et céramiques, frittage sous charge, travail thermomécanique complexe et traitement thermique à très haute température avec pour conséquence un coût de fabrication très élevé.

La nuance testée dans l'exemple comparatif 2 est le MA 758 de SPECIAL METALS.

On note que l'alliage ODS de l'exemple comparatif 2 a une tenue au fluage bien meilleure que l'alliage au cobalt de l'exemple comparatif 1 : la pente de la courbe de fluage à 1200°C est 15 fois plus importante pour l'alliage comparatif au cobalt.

L'alliage de l'exemple 1 reste en deçà de l'alliage ODS avec une pente de courbe à 1200°C 2 à 3 fois plus importante, mais constitue une amélioration considérable par rapport à l'alliage de l'exemple comparatif 1.

On observe une différence de comportement similaire à 1000°C.

EXEMPLE 2

On prépare comme à l'exemple 1 et on évalue de la même façon les propriétés d'un autre alliage selon l'invention de la composition suivante :

|  | Cr | 28,5% |
|---|---|---|
|  | Ni | 8,9% |
|  | C | 0,5% |
|  | Ta | 8,5% |
|  | W | 0% |
| résiduels | Fe | < 3 % |
|  | Si | <1% |
|  | Mn | < 0,5% |
|  | Zr | < 0,1 % |
|  | autres sommés | < 1% |

le reste étant constitué par du cobalt.
Sa microstructure est semblable à celle de l'alliage de l'exemple 1, avec une phase intergranulaire constituée exclusivement de carbures de tantale TaC (rapport molaire Ta/C = 1,13).
Les résultats des essais de tenue mécanique figurent sur la figure 5 et dans le tableau 1.

EXEMPLE 3

On prépare comme à l'exemple 1 et on évalue de la même façon les propriétés d'un autre alliage selon l'invention de la composition suivante :

|  | Cr | 29% |
|---|---|---|
|  | Ni | 8,86% |
|  | C | 0,98% |
|  | Ta | 6% |
|  | W | 0% |
| résiduels : | Fe | < 3 % |
|  | Si | < 1% |
|  | Mn | < 0,5% |
|  | Zr | < 0,1% |
|  | autres sommés | < 1% |

le reste étant constitué par du cobalt.
Sa microstructure se distingue de celles des alliages des exemples 1 et 2 par la présence aux joints de grains, en plus de la même quantité de carbures de tantale, de carbures de chrome $Cr_{23}C_6$. La haute teneur en carbone produit une forte densité de carbures parmi lesquels la répartition est d'environ 50% de $Cr_{23}C_6$ pour 50% de TaC , en raison du rapport molaire Ta/C égal à 0,39.
Les résultats des essais de tenue mécanique figurent sur la figure 5 et dans le tableau 1.

EP 1 287 174 B1

**Tableau 1**

| Exemple | Température | Charge 21 MPa | | Charge 31 MPa | | Charge 45 MPa | |
|---|---|---|---|---|---|---|---|
| | | Durée (h) | Pente ($\mu$m.h$^{-1}$) | Durée (h) | Pente ($\mu$m.h$^{-1}$) | Durée (h) | Pente ($\mu$m.h$^{-1}$) |
| 1 | 1200 | - | - | 70 | 2,0 | 40 | 14,0 |
| | 1250 | 96 | 1,0 | 67 | 3,5 | 96 | 9,0 |
| | 1300 | 97 | 2,5 | - | - | - | - |
| 2 | 1200 | 63,5 | < 1,0 | 163 | 2,0 | - | - |
| 3 | 1150 | - | - | - | - | 64 | 6,0 |
| | 1200 | - | - | 75 | 4,5 | - | - |
| | 1250 | 66 | 1,5 | 66 | 10,0 | 17 | 140,0 |
| Ex. comp. 1 | 1150 | 64 | < 1,0 | - | - | - | - |
| | 1200 | 16 | 6,0 | 50 | 14,0 | - | - |
| Ex. comp. 2 | 1200 | - | - | 124 | < 1,0 | - | - |

EXEMPLE 4

On utilise un autre alliage renfermant du tungstène, de la composition suivante :

| | | |
|---|---|---|
| | Cr | 28,2% |
| | Ni | 8,74% |
| | C | 0,37% |
| | Ta | 5,84% |
| | W | 5,6% |
| résiduels | Fe | < 3 % |
| | Si | < 1% |
| | Mn | < 0,5% |
| | Zr | < 0,1% |
| | autres sommés | < 1% |

le reste étant constitué par du cobalt.

Sa microstructure illustrée par la figure 7, présentant une vue obtenue en microscopie électronique à balayage, révèle un réseau intergranulaire assez dense de carbures 6 de tantale eutectiques TaC avec la solution solide de cobalt. Lorsque la microstructure est observée en microscopie optique après attaque métallographique appropriée, il semble qu'il y ait différents types de carbures MC présents, probablement dus à la participation du tungstène à la constitution de ces carbures.

La microstructure révèle de manière claire une phase 7 sous forme de plages compactes dispersées riches en cobalt et en chrome en parts quasi-égales, qui seraient constituées de l'une des phases TCP « Topologically Close Compact », la phase sigma CoCr connue pour fragiliser l'alliage.

Ces phases n'apparaissent pas sur la microstructure de l'alliage de l'exemple 1 pourtant très proche en composition si ce n'est l'absence de tungstène. Dans cet exemple 4, la présence de 5,6% de tungstène s'ajoutant aux 28% de chrome, 8% de nickel et 6% de tantale semble avoir fait passer la teneur globale en éléments passant en solution solide au-delà d'une sorte de limite de solubilité.

La résistance à l'oxydation à 1200°C de cet alliage est évaluée par thermogravimétrie : on obtient $K_p$= $190.10^{-12}$ $g^2.cm^{-4}.s^{-1}$ et $K_v$ = $4,17.10^{-9}$ $g.cm^{-2}.s^{-1}$.

Dans un essai de résistance au fluage en flexion 3 points à 1200°C sous 31 MPa, cet alliage manifeste une vitesse de fluage de l'ordre de 7 à 8 $\mu m.h^{-1}$, ce qui est un peu moins bon que les alliages des exemples 1 à 3, mais est une nette amélioration par rapport à l'alliage de l'exemple comparatif 1.

Ces propriétés le rendent apte à être utilisé en atmosphère oxydante jusqu'à des températures de l'ordre de 1100 à 1150°C.

**Revendications**

1. Procédé de fabrication de laine minérale par centrifugation interne, dans lequel on déverse un débit de matière minérale en fusion dans une assiette de fibrage dont la bande périphérique est percée d'une multitude d'orifices par lesquels s'échappent des filaments de matière minérale fondue qui sont ensuite étirés en laine sous l'action d'un gaz, **caractérisé en ce que** la température de la matière minérale dans l'assiette est d'au moins 1100°C et **en ce que** l'assiette de fibrage est constituée d'un alliage exempt de B, Hf à base de cobalt comprenant les éléments suivants (en pourcentage pondéral de l'alliage) :

| | |
|---|---|
| Cr | 23 à 34% |
| Ni | 6 à 12% |
| Ta | 4,2 à 10% |
| C | 0,2 à 1,2% |
| W | 0 à 8% |
| Fe | moins de 3% |
| Si | moins de 1% |

(suite)

| Mn | moins de 0,5% |
|---|---|
| Zr | moins de 0,1% |

le reste étant constitué par du cobalt et des impuretés inévitables, le rapport molaire du tantale par rapport au carbone étant d'au moins 0,3.

**2.** Procédé selon la revendication 1, **caractérisé en ce que** la température de la matière minérale dans l'assiette est d'au moins 1150°C.

**3.** Procédé selon la revendication 2, **caractérisé en ce que** la composition de matière minérale renferme un taux de fer ferrique exprimé en $Fe_2O_3$, d'au moins 3% en poids, notamment d'au moins 5% en poids.

**4.** Procédé selon l'une des revendications précédentes, **caractérisé en ce que** la composition de matière minérale comprend les pourcentages pondéraux suivants :

| $SiO_2$ | 39-55%, | de préférence | 40-52% |
|---|---|---|---|
| $Al_2O_3$ | 16-27%, | -- | 16-25% |
| CaO | 3-35%, | -- | 10-25% |
| MgO | 0-15%, | -- | 0-10 % |
| $Na_2O$ | 0-15%, | -- | 6-12 % |
| $K_2O$ | 0-15%, | -- | 3-12% |
| $R_2O$ ( $Na_2O + K_2O$) | 10-17%, | -- | 12-17% |
| $P_2O_5$ | 0-3%, | -- | 0-2% |
| Fer total (exprimé en $Fe_2O_3$) | 0-15%, | -- | 4-12% |
| $B_2O_3$ | 0-8%, | -- | 0-4 % |
| $TiO_2$ | 0-3%, | | |

MgO étant compris entre 0 et 5%, notamment entre 0 et 2% lorsque $R_2O \leq 13,0\%$.

**5.** Procédé selon l'une quelconque des revendications précédentes, **caractérisé en ce que** la composition de l'alliage de l'assiette comprend de 5,5 à 9% en poids de tantale.

**6.** Procédé selon l'une quelconque des revendications précédentes, **caractérisé en ce que** la composition de l'alliage de l'assiette présente un rapport molaire Ta/C supérieur ou égal à 0,9.

**7.** Procédé selon l'une des revendications précédentes, **caractérisé en ce que** la teneur en tantale de l'alliage est choisie de telle façon que la phase intergranulaire présente aux joints de grains dudit alliage soit composée exclusivement de carbure de tantale TaC.

**8.** Procédé selon la revendication 7, **caractérisé en ce que** la composition de l'alliage de l'assiette comprend de 0,3 à 0,55% en poids de carbone.

**9.** Procédé selon la revendication 7, **caractérisé en ce que** la composition de l'alliage comprend de 0,8 à 1,2% en poids de carbone.

**10.** Procédé selon la revendication 7, **caractérisé en ce que** la composition de l'alliage de l'assiette présente un rapport molaire Ta/C de l'ordre de 0,3 à 0,5.

**11.** Procédé selon l'une quelconque des revendications précédentes, **caractérisé en ce que** la composition de l'alliage de l'assiette est dénuée de tungstène.

**12.** Procédé selon la revendication 11, **caractérisé en ce que** la matière minérale fondue a une température de liquidus de l'ordre de 1140°C ou plus.

**13.** Alliage à base de cobalt doué de résistance mécanique à haute température en milieu oxydant, comprenant en outre du chrome, du nickel, du tantale et du carbone, **caractérisé en ce qu'**il est exempt de B, Hf et se compose des éléments suivants (les proportions étant indiquées en pourcentage pondéral de l'alliage) :

| | |
|---|---|
| Cr | 23 à 34% |
| Ni | 6 à 12% |
| Ta | 4,2 à 10% |
| C | 0,2 à 1,2% |
| W | 0 à 8% |
| Fe | moins de 3% |
| Si | moins de 1 % |
| Mn | moins de 0,5% |
| Zr | moins de 0,1% |

le reste étant constitué par du cobalt et des impuretés inévitables, le rapport molaire du tantale par rapport au carbone étant d'au moins 0,3.

**14.** Alliage à base de cobalt doué de résistance mécanique à haute température en milieu oxydant, comprenant en outre du chrome, du nickel, du tantale et du carbone, **caractérisé en ce qu'**il ne renferme pas de tungstène, il est exempt de B, Hf, et **en ce qu'**il se compose des éléments suivants (les proportions étant indiquées en pourcentage pondéral de l'alliage) :

| | |
|---|---|
| Cr | 23 à 34% |
| Ni | 6 à 12% |
| Ta | 4,2 à 10% |
| C | 0,2 à 1,2% |
| Fe | moins de 3% |
| Si | moins de 1% |
| Mn | moins de 0,5% |
| Zr | moins de 0,1% |

le reste étant constitué par du cobalt et des impuretés inévitables, le rapport molaire Ta/C étant d'au moins 0.3.

**15.** Alliage selon la revendication 13 ou 14, **caractérisé en ce que** les proportions des éléments sont dans les gammes suivantes :

| | |
|---|---|
| Cr | 26 à 32% |
| Ni | 8 à 10% |
| Ta | 4,5 à 10% |
| C | 0,3 à 1,1% |

**16.** Alliage selon la revendication 14 ou 15, **caractérisé en ce que** le rapport molaire du tantale par rapport au carbone est d'au moins 0,9.

**17.** Alliage selon la revendication 16, **caractérisé en ce que** la teneur en carbone est de l'ordre de 0,3 à 0,55%.

**18.** Alliage selon la revendication 14 ou 15, **caractérisé en ce que** la teneur en carbone est de l'ordre de 0,8 à 1,2%.

**19.** Alliage selon la revendication 14 ou 15, **caractérisé en ce que** le rapport molaire Ta/C est de l'ordre de 0,3 à 0,5.

**20.** Alliage à base de cobalt doué de résistance mécanique à haute température en milieu oxydant, comprenant en outre du chrome, du nickel, du tantale et du carbone, **caractérisé en ce qu'**il est exempt de B, Hf, et se compose des éléments suivants (les proportions étant indiquées en pourcentage pondéral de l'alliage) :

| Cr | 23 à 34% |
|----|----------|
| Ni | 6 à 12% |
| Ta | 4,2 à 10% |
| W | 4 à 8% |
| C | 0,8 à 1,2% |
| Fe | moins de 3% |
| Si | moins de 1% |
| Mn | moins de 0,5% |
| Zr | moins de 0,1% |

le reste étant constitué par du cobalt et des impuretés inévitables, le rapport molaire Ta/C étant d'au moins 0,3, de préférence d'au moins 0,35, avantageusement de l'ordre de 0,35 à 0,5.

21. Article, notamment article utilisable notamment pour l'élaboration ou la transformation à chaud du verre, réalisé en un alliage selon l'une quelconque des revendications 13 à 20, notamment par fonderie.

22. Article selon la revendication 21, obtenu par fonderie.

23. Article selon la revendication 22, ayant subi un traitement thermique après coulée de l'alliage.

24. Article selon la revendication 22 ayant subi un forgeage après coulée de l'alliage.

25. Article selon l'une des revendications 21 à 24, consistant en une assiette de fibrage pour la fabrication de laine minérale.

26. Procédé de fabrication d'un article selon la revendication 23, comprenant la coulée de l'alliage fondu dans un moule approprié, et un traitement thermique de l'article moulé comprenant un premier recuit à une température de 1100 à 1250°C et un second recuit à une température de 850 à 1050°C.

27. Utilisation en atmosphère oxydante à une température d'au moins 1100°C d'un article constitué d'un alliage exempt de B, Hf à base de cobalt comprenant les éléments suivants (en pourcentage pondéral de l'alliage) :

| Cr | 23 à 34% |
|----|----------|
| Ni | 6 à 12% |
| Ta | 4,2 à 10% |
| C | 0,2 à 1,2% |
| W | 0 à 8% |
| Fe | moins de 3% |
| Si | moins de 1% |
| Mn | moins de 0,5% |
| Zr | moins de 0,1% |

le reste étant constitué par du cobalt et des impuretés inévitables, le rapport molaire du tantale par rapport au carbone étant d'au moins 0,3.

**Patentansprüche**

1. Verfahren zur Herstellung von Mineralwolle durch Innenschleudern, bei dem ein Mineralschmelze-Mengenstrom in eine Faserziehscheibe gegossen wird, in deren Umfangsstreifen eine Vielzahl von Öffnungen ausgebildet sind, durch welche Mineralschmelze-Filamente austreten, welche anschließend unter der Einwirkung eines Gases wollartig gestreckt werden, **dadurch gekennzeichnet, daß** die Temperatur des Mineralstoffs in der Scheibe mindestens 1100°C beträgt und daß die Faserziehscheibe durch eine B- und Hf-freie Legierung auf Kobaltbasis gebildet ist, welche die folgenden Elemente (in Gewichtsprozent der Legierung) enthält:

| Cr | 23 bis 34 % |
|----|-------------|
| Ni | 6 bis 12 % |
| Ta | 4,2 bis 10 % |
| C | 0,2 bis 1,2 % |
| W | 0 bis 8 % |
| Fe | unter 3 % |
| Si | unter 1 % |
| Mn | unter 0,5 % |
| Zr | unter 0,1 %, |

wobei der Rest durch Kobalt und unvermeidbare Verunreinigungen gebildet ist, wobei das Molverhältnis von Tantal zu Kohlenstoff mindestens 0,3 beträgt.

2. Verfahren nach Anspruch 1, **dadurch gekennzeichnet, daß** die Temperatur des Mineralstoffs in der Scheibe mindestens 1150°C beträgt.

3. Verfahren nach Anspruch 2, **dadurch gekennzeichnet, daß** die Mineralstoffzusammensetzung einen in $Fe_2O_3$ angegebenen Eisen-III-Oxidgehalt von mindestens 3 Gew.-% und insbesondere von mindestens 5 Gew.-% enthält.

4. Verfahren nach einem der vorhergehenden Ansprüche, **dadurch gekennzeichnet, daß** das Mineralstoffzusammensetzung folgende Massenanteile enthält:

| $SiO_2$ | 39 - 55 %, | bevorzugt | 40 - 52 % |
|---------|------------|-----------|-----------|
| $Al_2O_3$ | 16 - 27 % | -- | 16 - 25 % |
| CaO | 3 - 35 % | -- | 10 - 25 % |
| MgO | 0 - 15 % | -- | 0 - 10 % |
| $Na_2O$ | 0 - 15 % | -- | 6 - 12 % |
| $K_2O$ | 0 - 15 % | -- | 3 - 12 % |
| $R_2O$ ($Na_2O + K_2O$) | 10 - 17 % | -- | 12 - 17 % |
| $P_2O_5$ | 0 - 3 % | -- | 0 - 2 % |
| Gesamteisen (in $Fe_2O_3$ angegeben) | 0 - 15 % | -- | 4 - 12 % |
| $B_2O_3$ | 0 - 8 % | -- | 0 - 4 % |
| $TiO_2$ | 0 - 3 %, | | |

wobei MgO zwischen 0 und 5 % und insbesondere zwischen 0 und 2 % enthalten ist, wenn $R_2O \leq 13,0$ %.

5. Verfahren nach einem der vorhergehenden Ansprüche, **dadurch gekennzeichnet, daß** die Zusammensetzung der Scheibenlegierung 5,5 bis 9 Gew.-% Tantal enthält.

6. Verfahren nach einem der vorhergehenden Ansprüche, **dadurch gekennzeichnet, daß** die Zusammensetzung der Scheibenlegierung ein Molverhältnis Ta/C von größer oder gleich 0,9 aufweist.

7. Verfahren nach einem der vorhergehenden Ansprüche, **dadurch gekennzeichnet, daß** der Tantalgehalt der Legierung so gewählt ist, daß die an den Komgrenzen der genannten Legierung vorhandene intergranulare Phase ausschließlich aus Tantalkarbid TaC besteht.

8. Verfahren nach Anspruch 7, **dadurch gekennzeichnet, daß** die Zusammensetzung der Scheibenlegierung 0,3 bis 0,55 Gew.-% Kohlenstoff enthält.

9. Verfahren nach Anspruch 7, **dadurch gekennzeichnet, daß** die Zusammensetzung der Legierung 0,8 bis 1,2 Gew.-% Kohlenstoff enthält.

10. Verfahren nach Anspruch 7, **dadurch gekennzeichnet, daß** die Zusammensetzung der Scheibenlegierung ein Molverhältnis Ta/C in der Größenordnung von 0,3 bis 0,5 aufweist.

11. Verfahren nach einem der vorhergehenden Ansprüche, **dadurch gekennzeichnet, daß** die Zusammensetzung der Scheibenlegierung wolframfrei ist.

12. Verfahren nach Anspruch 11, **dadurch gekennzeichnet, daß** die Mineralschmelze eine Liquidustemperatur in der Größenordnung von 1140°C oder darüber aufweist.

13. In oxidierender Umgebung warmfeste Legierung auf Kobaltbasis, welche ferner Chrom, Nickel, Tantal und Kohlenstoff enthält, **dadurch gekennzeichnet, daß** sie B- und Hf-frei ist und aus den folgenden Elementen besteht (wobei die Anteile in Gewichtsprozent der Legierung angegeben sind):

| Cr | 23 bis 34 % |
|----|-------------|
| Ni | 6 bis 12 % |
| Ta | 4,2 bis 10 % |
| C | 0,2 bis 1,2 % |
| W | 0 bis 8 % |
| Fe | unter 3 % |
| Si | unter 1 % |
| Mn | unter 0,5 % |
| Zr | unter 0,1 %, |

wobei der Rest durch Kobalt und unvermeidbare Verunreinigungen gebildet ist, wobei das Molverhältnis von Tantal zu Kohlenstoff mindestens 0,3 beträgt.

14. In oxidierender Umgebung warmfeste Legierung auf Kobaltbasis, welche ferner Chrom, Nickel, Tantal und Kohlenstoff enthält, **dadurch gekennzeichnet, daß** sie kein Wolfram enthält, B- und Hf-frei ist und daß sie aus den folgenden Elementen besteht (wobei die Anteile in Gewichtsprozent der Legierung angegeben sind):

| Cr | 23 bis 34 % |
|----|-------------|
| Ni | 6 bis 12 % |
| Ta | 4,2 bis 10 % |
| C | 0,2 bis 1,2 % |
| Fe | unter 3 % |
| Si | unter 1 % |
| Mn | unter 0,5 % |
| Zr | unter 0,1 %, |

wobei der Rest durch Kobalt und unvermeidbare Verunreinigungen gebildet ist, wobei das Molverhältnis Ta/C mindestens 0,3 beträgt.

15. Legierung nach Anspruch 13 oder 14, **dadurch gekennzeichnet, daß** die Anteile der Elemente in den folgenden Bereichen liegen:

| Cr | 26 bis 32 % |
|----|-------------|
| Ni | 8 bis 10 % |
| Ta | 4,5 bis 10 % |
| C | 0,3 bis 1,1 %. |

16. Legierung nach Anspruch 14 oder 15, **dadurch gekennzeichnet, daß** das Molverhältnis von Tantal zu Kohlenstoff mindestens 0,9 beträgt.

17. Legierung nach Anspruch 16, **dadurch gekennzeichnet, daß** der Kohlenstoffgehalt in der Größenordnung von 0,3 bis 0,55 % liegt.

**18.** Legierung nach Anspruch 14 oder 15, **dadurch gekennzeichnet, daß** der Kohlenstoffgehalt in der Größenordnung von 0,8 bis 1,2 % liegt.

**19.** Legierung nach Anspruch 14 oder 15, **dadurch gekennzeichnet, daß** das Molverhältnis Ta/C in der Größenordnung von 0,3 bis 0,5 liegt.

**20.** In oxidierender Umgebung warmfeste Legierung auf Kobaltbasis, welche ferner Chrom, Nickel, Tantal und Kohlenstoff enthält, **dadurch gekennzeichnet, daß** sie B- und Hf-frei ist und aus den folgenden Elementen besteht (wobei die Anteile in Gewichtsprozent der Legierung angegeben sind):

| | |
|---|---|
| Cr | 23 bis 34 % |
| Ni | 6 bis 12 % |
| Ta | 4,2 bis 10 % |
| W | 4 bis 8 % |
| C | 0,8 bis 1,2 % |
| Fe | unter 3 % |
| Si | unter 1 % |
| Mn | unter 0,5 % |
| Zr | unter 0,1 %, |

wobei der Rest durch Kobalt und unvermeidbare Verunreinigungen gebildet ist, wobei das Molverhältnis Ta/C mindestens 0,3, bevorzugt mindestens 0,35 beträgt und vorteilhafterweise in der Größenordnung von 0,35 bis 0,5 liegt.

**21.** Aus einer Legierung nach einem der Ansprüche 13 bis 20 insbesondere durch Gußtechnik hergestellter Artikel, insbesondere Artikel, der insbesondere für die Glaserzeugung und -warmverarbeitung verwendbar ist.

**22.** Artikel nach Anspruch 21, der durch Gußtechnik erhalten wird.

**23.** Artikel nach Anspruch 22, der nach dem Gießen der Legierung thermisch behandelt wurde.

**24.** Artikel nach Anspruch 22, der nach dem Gießen der Legierung geschmiedet wurde.

**25.** Artikel nach einem der Ansprüche 21 bis 24, der eine Faserziehscheibe für die Herstellung von Mineralwolle darstellt.

**26.** Verfahren zur Herstellung eines Artikels nach Anspruch 23, welches das Gießen der Schmelzlegierung in eine geeignete Form sowie eine thermische Behandlung des gegossenen Artikels mit einem ersten Glühen bei einer Temperatur von 1100 bis 1250°C und einem zweiten Glühen bei einer Temperatur von 850 bis 1050°C umfasst.

**27.** Verwendung eines Artikels in einer oxidierenden Atmosphäre bei einer Temperatur von mindestens 1100°C, wobei der Artikel aus einer Legierung auf Kobaltbasis gebildet ist, welche die folgenden Elemente (in Gewichtsprozent der Legierung) enthält:

| | |
|---|---|
| Cr | 23 bis 34 % |
| Ni | 6 bis 12 % |
| Ta | 4,2 bis 10 % |
| C | 0,2 bis 1,2 % |
| W | 0 bis 8 % |
| Fe | unter 3 % |
| Si | unter 1 % |
| Mn | unter 0,5 % |
| Zr | unter 0,1 %, |

wobei der Rest durch Kobalt und unvermeidbare Verunreinigungen gebildet ist, wobei das Molverhältnis von Tantal zu Kohlenstoff mindestens 0,3 beträgt.

**Claims**

1. Process for manufacturing mineral wool by internal centrifugal process, in which a stream of molten mineral material is poured into a fiberizing spinner, the peripheral band of which is pierced by a multitude of orifices through which filaments of molten mineral material escape, these filaments then being attenuated into wool due to the action of a gas, **characterized in that** the temperature of the mineral material in the spinner is at least 1100°C and **in that** the fiberizing spinner is made of a cobalt-based alloy which does not contain B, Hf and comprises the following elements (in percentages by weight of the alloy):

| Cr | 23 to 34% |
|----|-----------|
| Ni | 6 to 12% |
| Ta | 4.2 to 10% |
| C | 0.2 to 1.2% |
| W | 0 to 8% |
| Fe | less than 3% |
| Si | less than 1% |
| Mn | less than 0.5% |
| Zr | less than 0.1%, |

the balance consisting of cobalt and inevitable impurities, the molar ratio of tantalum to carbon being at least 0.3.

2. Process according to Claim 1, **characterized in that** the temperature of the mineral material in the spinner is at least 1150°C.

3. Process according to Claim 1, **characterized in that** the mineral composition has a ferric iron content, expressed as $Fe_2O_3$, of at least 3% by weight, especially at least 5% by weight.

4. Process according to either of the preceding claims, **characterized in that** the mineral composition comprises the following percentages by weight:

| $SiO_2$ | 39-55%, | preferably | 40-52% |
|---------|---------|------------|--------|
| $Al_2O_3$ | 16-27%, | -- | 16-25% |
| CaO | 3-35%, | -- | 10-25% |
| MgO | 0-15%, | -- | 0-10% |
| $Na_2O$ | 0-15%, | -- | 6-12% |
| $K_2O$ | 0-15%, | -- | 3-12% |
| $R_2O$ ($Na_2O + K_2O$) | 10-17%, | -- | 12-17% |
| $P_2O_5$ | 0-3%, | -- | 0-2% |
| Total iron (expressed as $Fe_2O_3$) | 0-15%, | -- | 4-12% |
| $B_2O_3$ | 0-8%, | -- | 0-4% |
| $TiO_2$ | 0-3%, | | |

MgO being between 0 and 5%, especially between 0 and 2%, when $R_2O \leq 13.0\%$

5. Process according to any one of the preceding claims, **characterized in that** the composition of the alloy of the spinner includes from 5.5 to 9% by weight of tantalum.

6. Process according to any one of the preceding claims, **characterized in that** the composition of the alloy of the spinner has a Ta/C molar ratio of greater than or equal to 0.9.

7. Process according to any one of the preceding claims, **characterized in that** the tantalum content in the alloy is chosen so that the intergranular phase present at the grain boundaries of the said alloy is composed exclusively of tantalum carbide TaC.

8. Process according to Claim 7, **characterized in that** the composition of the alloy of the spinner includes from 0.3 to 0.55% by weight of carbon.

9. Process according to Claim 7, **characterized in that** the composition of the alloy includes from 0.8 to 1.2% by weight of carbon.

10. Process according to Claim 7, **characterized in that** the composition of the alloy of the spinner has a Ta/C molar ratio of about 0.3 to 0.5.

11. Process according to any one of the preceding claims, **characterized in that** the composition of the alloy of the spinner is tungsten-free.

12. Process according to Claim 11, **characterized in that** the molten mineral material has a liquidus temperature of about 1140°C or higher.

13. Cobalt-based alloy exhibiting high-temperature mechanical strength in an oxidizing medium, which also includes chromium, nickel, tantalum and carbon, **characterized in that** it does not contain B, Hf and is composed of the following elements (the proportions being indicated as percentages by weight of the alloy):

| Cr | 23 to 34% |
|----|-----------|
| Ni | 6 to 12% |
| Ta | 4.2 to 10% |
| C | 0.2 to 1.2% |
| W | 0 to 8% |
| Fe | less than 3% |
| Si | less than 1% |
| Mn | less than 0.5% |
| Zr | less than 0.1%, |

the balance consisting of cobalt and inevitable impurities and the tantalum-to-carbon molar ratio being at least 0.3.

14. Cobalt-based alloy exhibiting high-temperature mechanical strength in an oxidizing medium, which also includes chromium, nickel, tantalum and carbon, **characterized in that** it does not contain tungsten, B, Hf and **in that** it is composed of the following elements (the proportions being indicated as percentages by weight of the alloy):

| Cr | 23 to 34% |
|----|-----------|
| Ni | 6 to 12% |
| Ta | 4.2 to 10% |
| C | 0.2 to 1.2% |
| Fe | less than 3% |
| Si | less than 1% |
| Mn | less than 0.5% |
| Zr | less than 0.1%, |

the balance consisting of cobalt and inevitable impurities and the Ta/C molar ratio being at least 0.3.

15. Alloy according to Claim 13 or 14, **characterized in that** the proportions of the elements are in the following ranges:

| Cr | 26 to 32% |
|----|-----------|
| Ni | 8 to 10% |
| Ta | 4.5 to 10% |
| C | 0.3 to 1.1%. |

**EP 1 287 174 B1**

**16.** Alloy according to Claim 14 or 15, **characterized in that** the tantalum-to-carbon molar ratio is at least 0.9.

**17.** Alloy according to Claim 16, **characterized in that** the carbon content is about 0.3 to 0.55%.

**18.** Alloy according to Claim 14 or 15, **characterized in that** the carbon content is about 0.8 to 1.2%.

**19.** Alloy according to Claim 14 or 15, **characterized in that** the Ta/C molar ratio is about 0.3 to 0.5.

**20.** Cobalt-based alloy exhibiting high-temperature mechanical strength in an oxidizing medium, which also includes chromium, nickel, tantalum and carbon, **characterized in that** it does not contain B, Hf and is composed of the following elements (the proportions indicated being the percentages by weight of the alloy).

| | |
|----|----------------|
| Cr | 23 to 34% |
| Ni | 6 to 12% |
| Ta | 4.2 to 10% |
| W | 4 to 8% |
| C | 0.8 to 1.2% |
| Fe | less than 3% |
| Si | less than 1% |
| Mn | less than 0.5% |
| Zr | less than 0.1%, |

the balance consisting of cobalt and inevitable impurities and the Ta/C molar ratio being at least 0.3, preferably at least 0.35 and advantageously about 0.35 to 0.5.

**21.** Article, especially an article that can be used in particular for the production or hot-conversion of glass, made of an alloy according to any one of Claims 13 to 20, especially by foundrywork.

**22.** Article according to Claim 21, obtained by foundrywork.

**23.** Article according to Claim 22, having undergone a heat treatment after the alloy was cast.

**24.** Article according to Claim 22, having undergone a forging operation after the alloy was cast.

**25.** Article according to one of Claims 21 to 24, consisting of a fiberizing spinner for the manufacture of mineral wool.

**26.** Process for manufacturing an article according to Claim 23, comprising the casting of the molten alloy in a suitable mould, and a heat treatment of the moulded article comprising a first annealing step at a temperature of 1100 to 1250°C and a second annealing step at a temperature of 850 to 1050°C.

**27.** Use, in an oxidizing atmosphere at a temperature of at least 1100°C, of an article made of a cobalt-based alloy which does not contain B, Hf and comprises the following elements (in percentages by weight of the alloy):

| | |
|----|----------------|
| Cr | 23 to 34% |
| Ni | 6 to 12% |
| Ta | 4.2 to 10% |
| C | 0.2 to 1.2% |
| W | 0 to 8% |
| Fe | less than 3% |
| Si | less than 1% |
| Mn | less than 0.5% |
| Zr | less than 0.1%, |

the balance consisting of cobalt and inevitable impurities and the tantalum-to-carbon molar ratio being at least 0.3.

23

FIG.1

FIG.3

FIG.2

## FIG.4

100μm

Courbe A: Ex. 1
Courbe E: Ex. 2
Courbe F: Ex. 3
Courbe G: Ex. Comp. 1
Courbe H: Ex. Comp. 2

## FIG.5

**FIG.6**

**FIG.7**